# EUROPÄISCHE PATENTSCHRIFT

(11) **EP 0 518 912 B1**
(45) Veröffentlichungstag und Bekanntmachung des Hinweises auf die Patenterteilung: **22.06.1994**
(21) Anmeldenummer: 91905121.9
(22) Anmeldetag: 06.03.1991
(51) Int. Cl.: B01D 21/24

(54) **KLÄR- ODER ABSETZBECKEN**
CLEARING OR SEDIMENTATION TANK
BASSIN D'EPURATION OU DE SEDIMENTATION

(30) Priorität: 06.03.1990 DE 4006925
(43) Veröffentlichungstag der Anmeldung: 23.12.1992
(73) Patentinhaber: Glaser, Bernd, D-22459 Hamburg (DE)
(72) Erfinder: Glaser, Bernd, D-22459 Hamburg (DE)
(74) Vertreter: Graalfs, Edo, Dipl.-Ing. Patentanwälte Hauck, Graalfs, Wehnert, Döring, Siemons
(86) Internationale Anmeldenummer: EP9100422
(87) Internationale Veröffentlichungsnummer: WO9113669

(56) Entgegenhaltungen:
- EP-A- 0 321 068
- CH-A- 229 433
- DE-A- 1 759 851
- DE-A- 3 821 521
- DE-A- 3 911 133

## Beschreibung

Die Erfindung bezieht sich auf ein Klär- oder Absetzbecken nach dem Oberbegriff des Patentanspruchs 1.

Bekanntlich haben Klär- oder Absetzbecken in der Wasser- und Abwassertechnik die Aufgabe, im Wasser befindliche Schmutzstoffe, die in der Regel ein geringeres oder ein größeres spezifisches Gewicht als Wasser haben, abzuscheiden. Für eine optimale Abscheidung ist es daher entscheidend, daß das einlaufende Wasser möglichst gleichmäßig im Klärbecken verteilt wird, damit die Verweilzeit im Becken ausgenutzt wird und die Schmutzstoffe ausreichend Zeit haben, sich am Boden abzusetzen oder aufzuschwimmen. Das ablaufende, von den Schmutzstoffen weitgehend befreite Wasser soll möglichst gleichmäßig abgezogen werden, damit keine Kurzschlußströme entstehen. Diese würden Schmutzpartikel mitreißen.

Es ist bekannt, Reinwasser mit Hilfe eines sogenannten Überfallwehrs abzuziehen. Es ist auch bekannt, das Überfallwehr von einer Leiste zu bilden, die in der Höhe verstellt werden kann. Die obere Kante der Leiste kann zahnartig ausgebildet sein. Aus der DE-OS 38 21 521 ist auch bekannt, das Reinwasser durch Löcher hindurchtreten zu lassen, die in einer Rinne oder einem Randabschnitt des Beckens vorgesehen sind. Hierbei läuft das Reinwasser nicht nach dem Überlaufprinzip ab, sondern über Öffnungen oder Löcher, wobei die Ablaufmenge abhängig ist vom Niveau im Klärbecken. Der Vorteil bei dieser Ausbildung liegt darin, daß Niveaudifferenzen, die insbesondere durch Windbeeinflussung hervorgerufen werden, sich nur minimal auswirken.

Solange eine gewisse Mindestwassermenge dem Becken zufließt, bleiben die Abflußlöcher eingetaucht und die Rinnenwände übernehmen gleichzeitig die Funktion sogenannter Tauchwände. Diese haben die Aufgabe, den Schwimmschlamm zurückzuhalten. Eine derartige Tauchwand ist in der oben genannten Offenlegungsschrift gleichfalls beschrieben. Erst wenn die zufließende Wassermenge unter einen gewissen Wert fällt, fällt das Niveau im Becken auf die Höhe oder in die Nähe der Abflußlöcher, so daß Schwimmschlamm mitgerissen werden kann. Eine Tauchwand, wie sie oben beschrieben wurde, verhindert das Mitreißen von Schwimmschlamm, ist jedoch verhältnismäßig aufwendig.

Gemäß DE-B-1 759 851 befindet sich der normale Flüssigkeitsspiegel im Klärbecken in Höhe von Löchern der Ablaufrinnen. Normalerweise können sich die Ablaufrinnen ohne zwischenliegendes Stauelement in eine gemeinsame Ablaufrinne entleeren. Der Wasserspiegel im Becken ist dann nur um eine geringe Überlaufhöhe von den Löchern entfernt, so daß die Gefahr des Austragens von Schwimmschlamm besteht.

Zusätzliche Staumittel werden zeitweilig eingesetzt, wenn der Wasserspiegel von Schwimmschlamm gereinigt werden soll. Hierzu wird der Flüssigkeitsspiegel im Becken bis auf ein Niveau angestaut, das über der Oberkante der Ablaufrinne liegt. Die Schwimmschlamm-Reinigung erfordert somit eine Unterbrechung des Normalbetriebes, wobei das Überfluten der Rinne mit einem zeitweilig erhöhten Schwimmschlammaustrag einhergehen kann.

Bei dem Klärbecken gemäß CH-A-292 433 ist jedes Loch mit einem Staumittel versehen. Diese Staumittel bewirken, daß der Wasserspiegel im Klärbecken höher liegt als die Öffnungen und normalerweise Schwimmstoffe nicht in den Abfluß kommen können. Das bedeutet jedoch einen hohen Herstellungs und Einrichtungsaufwand. Für einen gleichmäßigen Flüssigkeitsabzug müssen nämlich sehr viele Löcher jeweils mit Staumittel über den Umfang des Klärbeckens verteilt werden. Außerdem muß jedes Staumittel einjustiert werden, so daß überall ein etwa gleicher Wasserstrom abgezogen wird. Dies bedeutet auch einen besonders hohen betrieblichen Kontroll- und Justageaufwand. Bei ungleichmäßigen Senkungen des Beckens müssen nämlich die Staumittel einzeln nachjustiert werden. Nur so kann ein gleichmäßiger Flüssigkeitsabzug sichergestellt und auf Dauer das Mitreißen von Schwimmschlamm vermieden werden.

Der Erfindung liegt die Aufgabe zugrunde, ein Klär- oder Absetzbecken zu schaffen, bei dem der Vorteil des Abfließens von Reinwasser durch Löcher in die Reinwasserrinne beibehalten bleibt, jedoch das Mitreißen von Schwimmschlamm mit Sicherheit vermieden wird.

Diese Aufgabe wird erfindungsgemäß gelöst durch die Merkmale des Kennzeichnungsteils des Patentanspruchs 1.

Bei der Erfindung sind der Rinne und/oder der Abzugleitung Staumittel zugeordnet, die das Wasser in der Rinne anstauen. Die Staumittel sorgen dafür, daß in der Reinwasserrinne immer ein Mindestniveau vorhanden ist, das oberhalb der Löcher liegt. Dadurch wird erreicht, daß das Niveau im Becken zu keinem Zeitpunkt das Niveau der Löcher erreichen kann. Dadurch kann auch der Schwimmschlamm nicht mehr durch die Löcher mitgerissen werden, auch wenn die in das Becken zufließende Wassermenge sehr gering ist.

Nach einer Ausgestaltung der Erfindung kann das Staumittel von einem Stauelement gebildet sein, das an beiden Seiten eines unteren Anschlusses für die Abzugleitung angeordnet ist. Das Wasser aus der Reinwasserrinne gelangt durch Überfall über das Stauelement in die Abzugleitung. Ein Stauelement in der Reinwasserrinne kann jedoch Schwierigkeiten beim Reinigen der Rinne, zum Beispiel mit Hilfe einer umlaufenden Bürste, bereiten. Hier schafft eine weitere Ausgestaltung der Erfindung Abhilfe, indem eine annähernd parallel und im Abstand zur Rinnenwand verlaufende Stauwand die Rinne im Inneren in einen Abschnitt abteilt, der mit der Abzugleitung verbunden ist. Eine derartige Stauwand, über die das Wasser aus der Rinne in die Abzugleitung im Überfall geleitet wird, stellt für eine Reinigungsvorrichtung kein nennenswertes Hindernis dar.

Eine andere Alternative in der Verwirklichung eines Stauelements besteht nach einer Ausgestaltung der Erfindung darin, daß die Abzugleitung als Überlaufrohr ausgebildet ist, deren außerhalb des Beckens liegendes Ende so hoch angeordnet ist, daß die Löcher in der Rinne immer im Wasser eingetaucht sind. Das außen liegende Ende kann mit einer Teleskophülse zusammenwirken, mit deren Hilfe die Überlaufhöhe verstellt werden kann. Auch dadurch wird erreicht, daß in der Reinwasserrinne immer ein Mindestniveau erhalten bleibt.

Bei einer weiteren Ausgestaltung der Erfindung ist das Stauelement in der Abzugleitung vorgesehen. Anstelle eines Stauelements kann eine Drossel in der Abzugleitung vorgesehen werden, die dafür sorgt, daß vor der Drossel ein ausreichender Stau entsteht, um das beschriebene Mindestniveau in der Rinne zu halten.

Ist mit größeren zulaufenden Wassermengen zu rechnen, muß eine entsprechende Überfallkantenhöhe in der Rinne bzw. in der Abzugleitung vorgesehen werden, da der Staudruck vor der Rinne zur Überfallhöhe im Bereich des Stauelements hinzuaddiert werden muß. Dies führt zu einer Reinwasserrinne mit verhältnismäßig hohen Wänden. Eine Ausgestaltung der Erfindung sieht daher vor, daß das Stauelement, die Drossel, die Teleskophülse und dergleichen verstellbar sind, damit eine Anpassung an den Wasserzulauf in das Becken erfolgen kann. Eine derartige Anpassung kann beispielsweise dadurch erfolgen, daß die Bedienungsperson eine Verstellung von Hand vornimmt derart, daß bei großer Zulaufmenge die Überfallkantenhöhe tiefer und bei geringer Zulaufmenge höher eingestellt wird. Es kann jedoch auch eine Niveaumessung im Becken erfolen, so daß eine Steuervorrichtung in Abhängigkeit vom gemessenen Niveau das Stauelement, die Drossel oder das Teleskoprohr in der beschriebenen Weise verstellt. Anstelle einer Niveaumessung kann auch eine Messung der Zulaufmenge in das Becken stattfinden. Die Verstellung des Stauelements, des Teleskoprohrs oder der Drossel kann motorisch erfolgen, und zwar auch automatisch in Abhängigkeit von den Meßwerten. Eine sehr einfache Möglichkeit besteht erfindungsgemäß darin, daß ein Schwimmer das Niveau im Becken mißt und über ein Gestänge automatisch das Stauelement, die Drossel oder das Teleskoprohr verstellt. Befindet sich der Schwimmer im Becken, das Stauelement, die Drossel, das Teleskoprohr oder dergleichen außerhalb des Beckens, muß das Gestänge über den Beckenrand hinübergeführt werden. Dies ist jedoch bei einem Befahren des Beckenrandes mit einer Brücke nicht möglich. Daher sieht eine Ausgestaltung der Erfindung vor, daß ein Schwimmergefäß außerhalb des Beckens angeordnet ist, das mit dem Becken in Verbindung steht.

Bei der Steuerung eines Teleskoprohres mittels eines Schwimmers wird das Teleskoprohr vom Hebel nach unten gedrückt, wenn der Wasserspiegel im Becken steigt, damit mehr Wasser über den oberen Rand des Teleskoprohres fließen kann. Für eine geringe Schwankung des Wasserspiegels auch bei erheblich schwankendem Wasserzulauf müssen der Schwimmer an einem relativ kurzen und das Teleskoprohr an einem vergleichsweise langem Hebelarm angreifen. Das erforderliche Hebelarmverhältnis ist nachteilig, insbesondere weil es große Schwimmer für die Teleskoprohr-Betätigung erfordert. Ähnliche Probleme können beim Verstellen eines Stauelementes oder einer Drossel eintreten. Deshalb ist bei einer Ausgestaltung der Erfindung vorgesehen, daß Teleskoprohr, Stauelement oder Drossel beim Verstellen infolge ansteigenden Niveaus im Becken oder ansteigendem Strömungszulauf in das Becken zusätzliche Öffnungen in Abströmhindernisse freigeben. Hierdurch wird bei geringen Stellwegen eine große Änderung der Abflußmenge erreicht, so daß insbesondere ungünstige Hebeverhältnisse vermieden werden können. Die Abströmhindernisse mit Öffnungen können unbeweglich und/oder beweglich sein.

Hierzu weisen gemäß einer praktischen Ausgestaltung Überlaufrohr und Teleskophülse Öffnungen auf, die einander mit fortschreitender Absenkung des Teleskoprohres immer mehr überdecken und dabei einen zusätzlichen Querschnitt für den Wasserabfluß freigeben. Je nach den hydraulischen Gegebenheiten kann es möglich sein, daß Wasser ausschließlich durch die Öffnungen und nicht mehr über den oberen Rand des Teleskoprohres abläuft. Gemäß einer anderen Weiterbildung ist das Stauelement von einer Stauwand mit einer Öffnung wegklappbar, die infolgedessen den zusätzlichen Teil des Abflußquerschnittes freigibt. Ferner kann das Stauelement in der Eintrittsebene einer sich zum Strömungsaustritt hin erweiternden Bodenöffnung der Abzugsleitung schwenkbar sein. Diese Klappensteuerung gibt ebenfalls mit vergrößertem Schwenkwinkel einen überproportional vergrößerten Abströmquerschnitt frei.

Gemäß einer anderen Ausgestaltung können in den Löchern der Rinne in das Wasser im Becken hineinragende Abzugsrohre mit stirn- und/oder umfangsseitigen Löchern gehalten sein. Hierdurch kann insbesondere ein gleichmäßigerer Abzug des Wassers über die Beckenoberfläche erreicht werden. Für einen gleichmäßigen Abzug entlang der Rohrlänge können die Löcher einen sich entlang jedes Rohres ändernden Querschnitt aufweisen. Mehrere oder alle Rohre können mit nur einem Staumittel und ggf. nur einer zugehörigen Steuerung kombiniert sein.

Bei einer besonders kostengünstigen Version ist vorgesehen, daß der Rinnenboden einteilig mit der Beckenwand aus Beton geformt ist und am Rinnenboden vorn ein Lochblech befestigt ist, welches eine dem Zentrum des Beckens zugewandte Wand der Rinne bildet. Hierdurch wird insbesondere der Schalungsaufwand vermindert.

Mangels Steuerung des Staumittels, z.B. bei einem Ausfall der Steuerung, kann das Wasserniveau im Becken höher steigen als die Wände der Rinne. In diesem Fall funktionieren die Rinnenwände nicht mehr als Tauchwände und Schwimmschlamm kann in die Rinne ausgetragen und mitgerissen werden. Um dies sicher zu vermeiden ist gemäß einer weiteren Ausgestaltung vorgesehen, daß eine dem Zentrum des Beckens zugewandte innere Wand diejenige einer der Beckenwand zugewandten äußeren Wand der Rinne übersteigt. Hierdurch wird bei Ausfall der Steuerung oder vermehrtem Wasseranfall das aufgestaute Wasser über die äußere Wand der Rinne überlaufen, wobei die Tauchwandwirkung der inneren Wand erhalten bleibt und Schwimmschlamm sicher zurückgehalten wird.

Die Erfindung wird nachfolgend anhand von Ausführungsbeispielen näher erläutert.
- Fig. 1: zeigt äußerst schematisch eine Draufsicht auf einen Teil einer Reinwasserrinne für ein Klärbecken nach der Erfindung.
- Fig. 2: zeigt einen Schnitt entlang der Linie 2-2 der Fig.1.
- Fig. 3: zeigt einen Querschnitt durch eine Reinwasserrinne und eine Beckenwand bei einer anderen Ausführungsform der Erfindung.
- Fig. 4: zeigt eine ähnliche Darstellung wie Fig. 3 mit einer Schwimmersteuerung.
- Fig. 5: zeigt eine Draufsicht auf einen Teil des Beckenrandes mit einer Reinwasserrinne.
- Fig. 6: zeigt einen Schnitt durch die Anordnung nach Fig. 5 entlang der Linie 6-6.
- Fig. 7: zeigt einen Schnitt durch eine Beckenwand und eine Reinwasserrinne mit einer alternativen Schwimmersteuerung.
- Fig. 8: zeigt einen Schnitt durch eine Beckenwand und eine Reinwasserrinne mit vorderem Lochblech.
- Fig. 9: zeigt einen Schnitt durch eine Reinwasserrinne und eine Beckenwand bei schwimmergesteuerten Teleskoprohren mit Öffnungen und korrespondierenden Öffnungen im Überlaufrohr.
- Fig. 10: zeigt einen Schnitt durch eine Beckenwand und eine Reinwasserrinne mit schwimmergesteuertem Stauelement neben einer Stauwand mit einer Öffnung.
- Fig. 11: zeigt eine Beckenwand mit Reinwasserrinne mit schwimmergesteuertem Stauelement in einer Bodenöffnung.
- Fig. 12: zeigt einen Schnitt durch eine Beckenwand und eine Reinwasserrinne mit eingesetzten Abzugsrohren.
- Fig. 13: zeigt einen Schnitt durch eine Beckenwand und eine Reinwasserrinne mit besonders hoher innerer Wand.

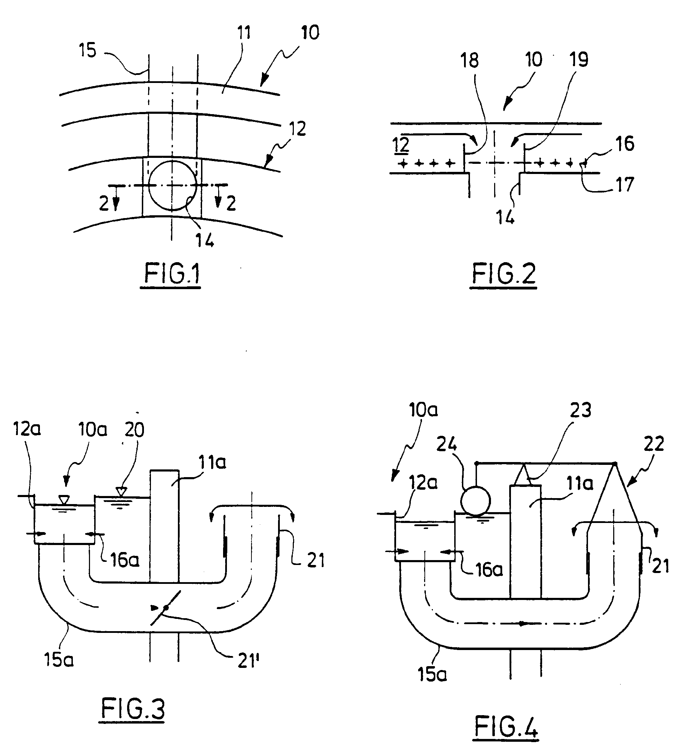

Ein nicht weiter dargestelltes Klärbecken 10 weist eine Beckenwand 11 auf. Im Inneren des Beckens 10 ist im Abstand zur Beckenwand 11 eine Reinwasserrinne 12 angeordnet (im vorliegenden Fall handelt es sich um ein Kreisbecken; dementsprechend ist die Rinne 12 ebenfalls kreisförmig). Der Boden der Rinne 12 weist eine kreisförmige Ablauföffnung 14 auf, die mit einer Ablaufleitung 15 verbunden ist, die durch die Beckenwand 11 hindurchgeht. Wie aus Fig. 2 zu erkennen, weist die Reinwasserrinne 12 eine Reihe von Löchern 16 auf, die auf einem Niveau 17 liegen, das in einem erheblichen Abstand unterhalb der Oberkante der Rinne 12 liegt. Zu beiden Seiten der Ablauföffnung 14 sind Stauelemente 18, 19 in der Rinne 12 angeordnet. Sie stauen das Wasser in der Reinwasserrinne 12 an bis zu deren Oberkante, so daß das Wasser aus der Rinne 12 im Überfall in die Öffnung 14 hineingetragen wird. Die Stauelemente 18, 19 sorgen dafür, daß das Niveau des Wassers in der Rinne nicht unterhalb der Oberkante der Stauelemente 18, 19 liegt, die Löcher 16 daher ständig unter Wasser liegen.

In den Figuren 3 und 4 ist ein Klärbecken 10a zu erkennen, in dem sich Wasser auf dem Niveau 20 befindet. Eine Reinwasserrinne 12a besitzt nahe ihrem Boden Durchtrittslöcher, wie durch die Pfeile 16a angedeutet. Eine Abzugleitung 15a erstreckt sich von dem Boden der Rinne 12a nach außen durch die Beckenwand 11a, wobei das außen liegende Ende über einen Krümmer nach oben gezogen ist. Das außen liegende Ende der Leitung 15a ist mit einer Teleskophülse 21 versehen, über deren oberen Rand das Reinwasser überlaufen kann. Die Höhe des oberen Endes der Teleskophülse 21 bestimmt das Niveau in der Reinwasserrinne 12a.

Wahlweise kann anstelle der Teleskophülse 21 eine Drosselklappe 21′ in der Leitung 15a vorgesehen werden, mit deren Hilfe ein Anstauen in der Rinne 12a erfolgt.

Fig. 4 zeigt eine gleiche Darstellung wie Fig. 3, wobei die Teleskophülse 21 mit einem Gestänge 22 verbunden ist, das sich bei 23 an der Beckenwand 11a abstützt. Am anderen Ende des Gestänges 22 befindet sich eine Schwimmerkugel 24, die auf dem Wasser im Becken 10a aufschwimmt. Wird der Schwimmer 24 nach oben verstellt, wird die Hülse 21 nach unten bewegt, wodurch das Niveau in der Rinne 12a abnimmt. Mit anderen Worten, fließt viel Wasser in das Becken 10a zu, kann auch mehr ausgetragen werden, wobei jedoch ebenfalls sichergestellt ist, daß das Wasser in der Rinne 12a in seinem Niveau nicht die Höhe der Löcher 16a erreicht.

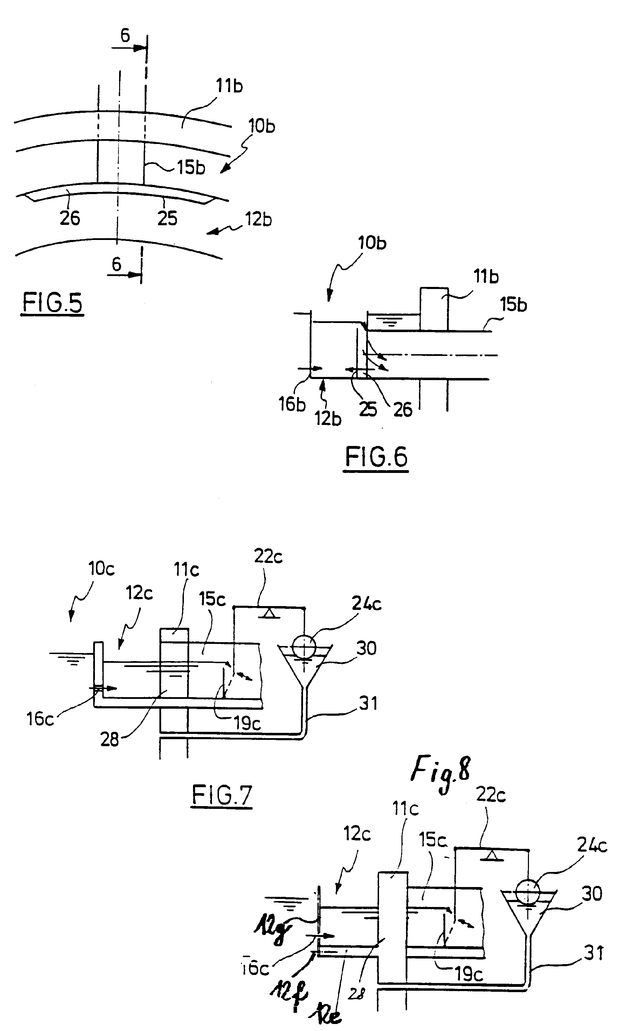

In den Figuren 5 und 6 ist ein Becken 10b gezeigt, das mit einer Rinne 12b versehen ist ähnlich der Darstellung nach Fig. 1 und 2. Wie insbesondere aus Fig. 5 zu erkennen, erstreckt sich parallel zur Außenwand der Rinne 12b und in geringem Abstand eine Stauwand 25, die an den Enden zur Rinnenwand abgebogen ist und einen Abschnitt 26 abteilt, der mit der Abzugleitung 15b verbunden ist. Aus Fig. 6 ist zu erkennen, daß die Höhe der Stauwand 25 etwas geringer ist als die Höhe der Rinnenwände. Das Wasser tritt daher im Überfall über die Stauwand 25 aus der Rinne 12b in die Abzugleitung 15b. Die Oberkante der Stauwand 25 bestimmt mithin das Niveau in der Rinne 12b.

In Fig. 7 ist ein Becken 10c gezeigt mit einer Beckenwand 11c und einer Rinne 12c, die unmittelbar an die Beckenwand 11c angrenzt, die Beckenwand 11c mithin eine Wand der Rinne 12 bildet. Eine Reihe von Löchern 16c verbindet die innere Rinnenwand mit dem Becken 10c. Eine Abzugleitung 15c oder ein Kanal ist über eine Öffnung 28 in der Beckenwand 11c mit der Rinne 12c verbunden. In der Abzugleitung 15c befindet sich ein aufrecht stehendes Stauelement 19c, dessen Höhe das Niveau in der Reinwasserrinne 12c bestimmt.

Das Stauelement 19c ist indessen klappbar, wie durch eine gestrichelte Linie angedeutet. Das Stauelement 19c ist über ein Gestänge 22c mit einer Schwimmerkugel 24c verbunden, die in einem Schwimmergefäß 30 angeordnet ist. Das Schwimmergefäß 30 steht über eine Leitung 31 mit dem Becken 10c in Verbindung. Das Niveau im Schwimmergefäß 30 ändert sich gleichsinnig mit dem im Becken 10c. Ist das Niveau im Becken 10c sehr hoch, schwimmt die Schwimmerkugel 24c höher, so daß die Kantenhöhe des Stauelements 19c verringert wird.

Es versteht sich, daß an die Stelle der Schwimmersteuerungen in den Figuren 4 und 7 andere Steuervorrichtungen treten können, beispielsweise kann das Niveau oder die Zuflußmenge zum bzw. im Becken anderweitig gemessen werden, und es findet zum Beispiel eine motorische Verstellung des Teleskoprohrs bzw. des Stauelements statt, um eine Anpassung an unterschiedliche Zuflußmengen in das Becken zu erhalten. Anstelle eines Stauelementes 19c kann auch eine Drossel verwendet werden, um das gewünschte Aufstauen in der Reinwasserrinne zu erhalten.

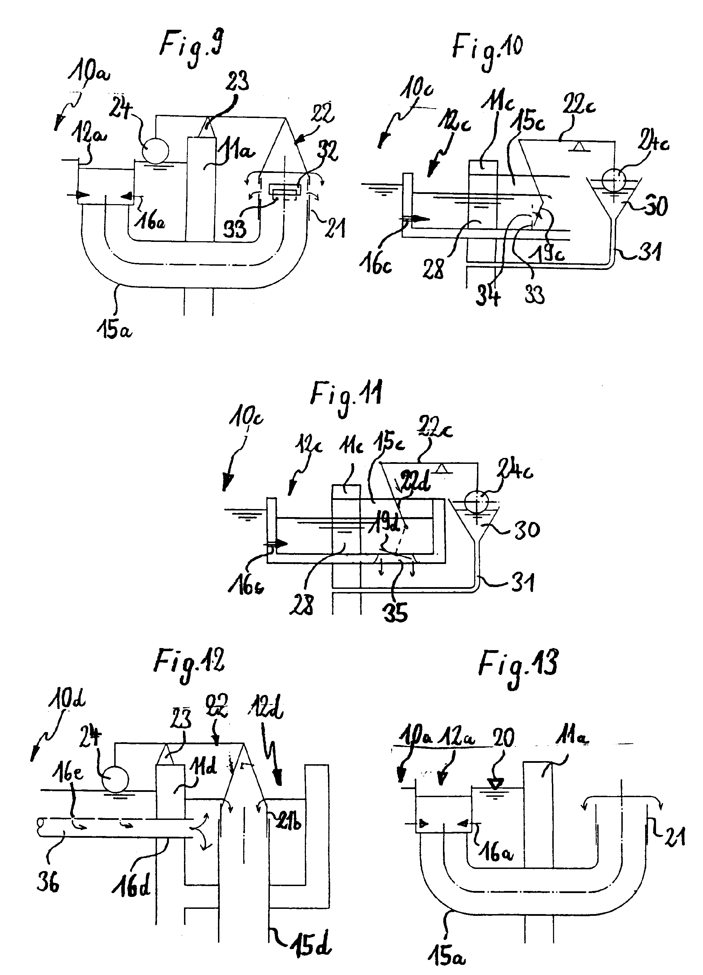

Soweit die Konstruktion in Fig. 8 mit der in Fig. 7 übereinstimmt, sind identische Bezugsziffern eingetragen. Ein einteilig mit der Beckenwand 11c aus Beton geformter Rinnenboden 12e hat jedoch vorn ein bei 12f angeschraubtes oder angedübeltes Lochblech 12g mit Löchern 16c für den Flüssigkeitseintritt.

Soweit Fig. 9 mit Fig. 4 übereinstimmt, sind identische Bezugsziffern eingetragen und wird auf obige Ausführungen verwiesen. Das Teleskoprohr 21 sowie das davon übergriffene Überlaufrohr am Ende der Leitung 15a sind jedoch mit Öffnungen 32, 33 versehen, die beim Absenken des Teleskoprohres 21 infolge eines im Becken ansteigenden Wasserspiegels mehr und mehr zur Deckung kommen. Sie geben dabei einen zusätzlichen Abströmquerschnitt unterhalb des oberen Endes des Teleskoprohres 21 frei.

Ein zusätzlicher Abströmquerschnitt ist auch bei der Variante gemäß Fig. 10 gegeben, für die im übrigen die Erläuterungen zur Fig. 7 gelten. Insoweit sind identische Bezugsziffern eingetragen. Zusätzlich ist auf dem Boden der Abzugleitung 15c eine senkrechte Stauwand 33 angeordnet, die etwa mittig eine Öffnung 34 aufweist. Beim Wegklappen des Stauelementes 19c wird die Öffnung 34 freigegeben, wodurch ein zusätzlicher Abströmquerschnitt freigegeben wird. Hierdurch werden ebenfalls ungünstige Hebelverhältnisse des Geständes 22c vermieden. Dasselbe Ziel wird auch mit der Konstruktion gemäß Fig. 11 verfolgt. Die Anordnung der Rinne 12c im Becken 10c und im Verhältnis zum Beckenrand 11c ist mit denjenigen gemäß Fig. 7 und 10 vergleichbar, so daß ebenfalls durch Löcher 16c und eine Öffnung 28 in der Beckenwand Wasser in einer Abzugleitung 15c abgezogen wird. In weiterer Übereinstimmung ist die Schwimmerkugel 24c in einem außerhalb des Beckens 10c befindlichen Schwimmergefäß 30 angeordnet, welches über eine Leitung 31 mit dem Beckeninnenraum kommuniziert. Das Gestänge 22c ist mittels einer Gelenkstange 22d mit einem Klappelement 19d verbunden, welches zu einem mittig angeordneten Schwenkgelenk in der Eintrittsebene einer Bodenöffnung 35 der Abzugleitung 15c angeordnet ist. Die Bodenöffnung 35 erweitert sich zum Strömungsaustritt hin, so daß das bei ansteigendem Wasserspiegel im Becken 10c zunehmend gekippte Stauelement 19d einen sich überproportional vergrößernden Austrittsquerschnitt freigibt.

Die Fig. 12 zeigt ein Becken 10d mit einer in einer Beckenwand 11d integrierten Ablaufrinne 12d, die außerhalb des Beckeninnenraumes angeordnet ist. Die innere, zugleich die Beckenwand 11d bildende Wand der Rinne 12d ist ebenfalls mit Löchern 16d versehen, in denen abdichtend Abzugsrohre 36 gehalten sind. Die Abzugsrohre 36 ragen bei einem Rundbecken radial zur Beckenmitte und haben mantelseitige 16e sowie - nicht dargestellte - stirnseitige Öffnungen, die einen gleichmäßigen Wasserabzug über einen großen Teil der Beckenfläche ermöglichen. Die Abzugsrohre 36 sind auf die Achse der Löcher 16d in der Wand der Rinne 12d ausgerichtet, so daß über den Wasserspiegel in der Rinne sichergestellt werden kann, daß ihre Öffnungen 16e und die Öffnungen an ihren Stirnseiten stets unterhalb des Wasser- spiegels im Becken 10d angeordnet sind. Hierdurch wird ebenfalls ein Mitreißen von Schwimmschlamm in den Ablauf verhindert.

Bei dieser Variante ist in der Rinne 12d zumindest ein Stauelement in Form eines Überlaufrohres 15d angeordnet, welches im Oberbereich mit einem Teleskoprohr 21b zusammen- wirkt. Im Gegensatz zu der Variante in Fig. 4 strömt das überlaufende Wasser in das Teleskoprohr 21b und das Überlaufrohr 15d hinein. In Übereinstimmung mit Fig. 4 wirkt jedoch das Teleskoprohr 21b mit einer Schwimmersteuerung zusammen, die einen Schwimmer 24 und ein auf dem Becken- rand 11d bei 23 gelagertes Hebel-Gestänge 22 aufweist. Die Steuerung sorgt dafür, daß bei Erhöhung des Wasserspiegels im Becken 10d die Überlaufhöhe durch Absenken des Teleskop- rohres 21b verringert wird, ohne daß der Wasserspiegel in der Rinne 12d unter das Niveau der Löcher 16e und 16f fällt. Hierdurch werden Zulaufschwankungen ausgeglichen, ohne daß Schwimmschlamm in den Wasserablauf gelangt.

Die Ausführungsform in Fig. 13 stimmt im wesentlichen mit derjenigen in Fig. 3 überein. Insoweit wurden identische Bezugsziffern verwendet und wird auf obige Erläuterungen Bezug genommen. Die innere, d.h. dem Zentrum des Beckens 10a zugewandte Wand der Rinne 12a ist jedoch etwas höher als die äußere, der Beckenwand 11a zugewandte Wand der Rinne. Bei einem Anstieg des Wasserniveaus 20 im Becken 10a funktioniert deshalb die innere Rinnenwand als Tauchwand und läuft das Wasser ggf. zunächst über die äußere Wand der Rinne 12a in deren Inneres hinein. Schwimmschlamm wird somit von der inneren Wand der Rinne 12a an einem Mitreißen in die Rinne und die Abzugleitung 15a gehindert. Hierdurch kann auch eine mangelhafte Trennung infolge eines Ausfalles einer Überlauf-Steuerung verhindert werden.

## Patentansprüche

1. Klär- oder Absetzbecken, das eine Ablaufrinne (12, 12a, 12b, 12c) für Reinwasser aufweist, wobei die Rinne in der dem Wasser im Becken zugekehrten Wand Löcher (16, 16a, 16b, 16c) für den Eintritt von Reinwasser aus dem Becken in die Rinne aufweist und mit einer Abzugleitung (15) verbunden ist, wobei der Rinne oder der Abzugleitung ein Staumittel zugeordnet ist, dadurch gekennzeichnet, daß das Staumittel (19, 21, 25, 19c, 21′) das Wasser in der Rinne (12, 12a, 12b, 12c) immer auf ein Niveau anstaut, das oberhalb der Löcher (16, 16a, 16b, 16c) liegt, und das Niveau in der Rinne das Wasser im Becken auf ein Niveau anstaut, welches oberhalb der Löcher (16, 16a, 16b, 16c) und unterhalb der Rinnenoberkante der dem Wasser zugekehrten Wand liegt.

2. Becken nach Anspruch 1,dadurch gekennzeichnet,daß beidseitig eines im Boden gelegenen Anschlusses (14) für die Abzugleitung (15) ein Stauelement (19) in der Rinne (12) angeordnet ist.

3. Becken nach Anspruch 1, dadurch gekennzeichnet,daß eine annähernd parallel und im Abstand zu einer Rinnenwand verlaufende Stauwand (25) im Inneren der Rinne einen abgeschlossenen Rinnenabschnitt (26) abteilt, der mit der Abzugleitung (15b) verbunden ist.

4. Becken nach Anspruch 1, dadurch gekennzeichnet, daß die Abzugleitung (15a) von einem Überfallrohr gebildet ist, deren außerhalb des Beckens (10a) liegendes Ende so hoch ist, daß die Löcher (16a) der Rinne (12a) stets im Wasser eingetaucht sind.

5. Becken nach Anspruch 4, dadurch gekennzeichnet, daß das Ende des Überlaufrohrs (15a) mit einer Teleskophülse (21) zusammenwirkt zur Verstellung der Überlaufhöhe.

6. Becken nach Anspruch 1, dadurch gekennzeichnet, daß ein Stauelement (19c) oder eine Drossel (21′) in der Abzugleitung (15a, 15c) vorgesehen ist.

7. Becken nach Anspruch 2, 5 oder 6,dadurch gekennzeichnet, daß eine Steuervorrichtung das Niveau im Becken oder die dem Becken zufließende Strömungsmenge mißt und das Stauelement, das Teleskoprohr oder die Drossel abhängig von den Meßwerten so verstellt, daß bei geringem Niveau oder geringer Zuflußmenge das Reinwasser in der Rinne höher angestaut wird als bei höherem Niveau bzw. größerer Zuflußmenge.

8. Becken nach Anspruch 7, dadurch gekennzeichnet, daß ein von einem das Niveau im Becken erfassenden Schwimmer (24, 24c) gesteuertes Gestänge (22, 22c) für das Stauelement (19c), die Drossel (21′) bzw. das Teleskoprohr (21) vorgesehen ist.

9. Becken nach Anspruch 8, dadurch gekennzeichent,daß der Schwimmer (24c) in einem Gefäß (30) außerhalb des Beckens (10c) angeordnet ist, das mit dem Becken (10c) in Strömungsverbindung steht.

10. Becken nach einem der Ansprüche 7 bis 9, dadurch gekennzeichnet, daß Teleskoprohr, Stauelement oder Drossel bei einem Verstellen infolge eines ansteigenden Niveaus im Becken (10a, 10c) oder eines gesteigerten Strömungszulaufs in das Becken zusätzliche Öffnungen (33, 34, 35) in Abströmhindernissen (15a, 33, 12c) freigeben.

11. Becken nach Anspruch 10, dadurch gekennzeichnet, daß Überlaufrohr (15a) und Teleskophülse (21) Öffnungen (33, 32) aufweisen, die einander mit fortschreitender Absenkung des Teleskoprohres immer mehr überdecken.

12. Becken nach Anspruch 10, dadurch gekennzeichnet, daß das Stauelement (19c) von einer Stauwand (33) mit einer Öffnung (34) wegklappbar ist.

13. Becken nach Anspruch 10, dadurch gekennzeichnet, daß das Stauelement (19d) in der Eintrittsebene einer sich zum Strömungsaustritt hin erweiternden Bodenöffnung (35) der Abzugsleitung (15c) schwenkbar ist.

14. Becken nach einem der Ansprüche 1 bis 13, dadurch gekennzeichnet, daß in den Löchern (16d) der Rinne (12d) in das Wasser im Becken (10d) hineinragende Abzugsrohre (36) mit stirn- und/oder umfangsseitigen Löchern (16e, 16f) gehalten sind.

15. Becken nach einem der Ansprüche 1 bis 14, dadurch gekennzeichnet, daß der Rinnenboden einteilig mit der Beckenwand (11c) aus Beton geformt ist und am Rinnenboden (12e) vorn ein Lochblech (12g) befestigt ist, welches eine dem Zentrum des Beckens (10c) zugewandte Wand der Rinne (12c) bildet.

16. Becken nach einem der Ansprüche 1 bis 14, dadurch gekennzeichnet, daß die Höhe einer dem Zentrum des Beckens (10a) zugewandten, inneren Wand diejenige einer der Beckenwand (11c) zugewandten, äußeren Wand der Rinne (12a) übersteigt.

## Claims

1. A clearing or sedimentation tank comprising a drain channel (12, 12a, 12b, 12c) for clear water, where in the wall towards the water in the tank said channel has holes (16, 16a, 16b, 16c) for the entry of clear water from said tank into said channel, and is connected with a drain conduit (15), a retaining means being associated to said channel or said drain conduit, characterized in that said retaining means (19, 21, 25, 19c, 21′) always stows up the water in said channel (12, 12a, 12b, 12c) to a level which is above said holes (16, 16a, 16b, 16c) and the level in said channel stows up the water in said tank to a level which is above said holes (16, 16a, 16b, 16c) and below the channel upper surface of the wall towards the water.

2. The tank according to claim 1, characterized in that on both sides of a junction (14) provided in the bottom for said drain conduit (15) a retaining element (19) is disposed in said channel (12).

3. The tank according to claim 1, characterized in that a retaining wall (25) being nearly parallel and at a distance to a channel wall separates in the inside of said channel a closed channel portion (26) which is connected with said drain conduit (15b).

4. The tank according to claim 1, characterized in that said drain conduit (15a) is formed by an overflow tube which's end outside said tank (10a) is so high that said holes (16a) of said channel (12a) are always dived into the water.

5. The tank according to claim 4, characterized in that the end of said over flow tube (15a) cooperates with a telescopic sleeve (21) to variate the overflow height.

6. The tank according to claim 1, characterized in that a retaining means (19c) or a throttle (21′) is provided in said drain conduit (15a, 15c).

7. The tank according to claim 2, 5 or 6, characterized in that a control apparatus measures the level in said tank or the rate of flow into said tank and adjusts said retaining element, said telescopic tube or said throttle depending on the measured values, so that at a low level or a low rate of inflow the clear water in said channel stows up higher than at a higher level or a higher rate of inflow, respectively.

8. The tank according to claim 7, characterized in that a linkage (22, 22c) being controlled by a float (24, 24c) taking up the level in said tank is provided for said retaining element (19c), said throttle (21′) or said telescopic tube (21), respectively.

9. The tank according to claim 8, characterized in that said float (24c) is disposed in a vessel (30) outside said tank (10c) which is in flow connection to said tank (10c).

10. The tank according to any of the claims 7 to 9, characterized in that during a shift due to a rising level in said tank (10a, 10c) or a rising rate of flow into said tank said telescopic tube,said retaining element or said throttle release additional openings (33, 34, 35) in slip stream obstacles (15a, 33, 12c).

11. The tank according to claim 10, charaterized in that said overflow tube (15a) and said telescopic sleeve (21) have openings (33, 32) which cover each other more and more with proceeding lowering of said telescopic tube.

12. The tank according to claim 10, characterized in that said retaining element (19c) is foldable away from a retaining wall (33) with an opening (34).

13. The tank according to claim 10, characterized in that said retaining element (19d) is turnable within the entrance surface of a bottom opening (35) of said drain conduit (15c) which extends towards the flow exit.

14. The tank according to any of the claims 1 to 13, characterized in that within said holes (16d) of said channel (12d),drain tubes (36) projecting into the water in said tank (10d) are held with endwise and/or circumferential holes (16e, 16f).

15. The tank according to any of the claims 1 to 14, characterized in that the channel bottom is formed one-piece with the tank wall (11c) of concrete and ahead of said channel bottom (12e) a perforated plate (12g) is fixed which forms a wall of said channel (12c) towards the center of said tank (10c).

16. The tank according to any of the claims 1 to 14, characterized in that the height of an inner wall directed to the center of said tank (10a) exceeds the one of an outer wall of said channel (12a) directed to said tank wall (11c).

## Revendications

1. Bassin de décantation ou d'épuration, qui présente une rigole d'écoulement (12, 12a, 12b, 12c) pour l'eau pure, la rigole présentant, sur sa paroi adjacente à l'eau du bassin, des trous (16, 16a, 16b, 16c) pour l'entrée dans la rigole d'eau pure provenant du bassin et étant reliée à une conduite de décharge (15), un moyen de retenue étant affecté à la rigole ou à la conduite de décharge,
caractérisé en ce que le moyen de retenue (19, 21, 25, 19c, 21′) retient toujours l'eau de la rigole (12, 12a, 12b, 12c) à un niveau situé au-dessus des trous (16, 16a, 16b, 16c), et que le niveau dans la rigole retient l'eau du bassin à un niveau situé au-dessus des trous (16, 16a, 16b, 16c) et au-dessous du bord supérieur de la paroi qui est adjacent à l'eau.

2. Bassin selon la revendication 1, caractérisé en ce qu'un élément de retenue (19) est placé dans la rigole (12) des deux côtés d'un branchement (14) situé sur le fond pour la conduite de décharge (15).

3. Bassin selon la revendication 1, caractérisé en ce qu'une paroi de retenue (25), longeant presque parallèlement et à une certain distance une paroi de la rigole isole, à l'intérieur de la rigole, une section fermée (26), qui est reliée à la conduite de décharge (15b).

4. Bassin selon la revendication 1, caractérisé en ce que la conduite de décharge (15a) est formée d'un tuyau de trop-plein, dont l'extrémité (10a) située à l'extérieur du bassin est si haute que les trous (16a) de la rigole (12a) sont constamment plongés dans l'eau.

5. Bassin selon la revendication 4, caractérisé en ce que l'extrémité du tuyau de trop-plein (15a) coopère avec une douille télescopique (21) pour régler la hauteur du trop-plein.

6. Bassin selon la revendication 1, caractérisé en ce qu'un élément de retenue (19c) ou un élément d'étranglement (21′) est prévu dans la conduite d'échappement (15a, 15c).

7. Bassin selon la revendication 2, 5 ou 6, caractérisé en ce qu'un dispositif de commande mesure le niveau dans le bassin ou le courant entrant dans le bassin et déplace l'élément de retenue, le tuyau télescopique ou l'élément d'étranglement en fonction des mesures de sorte que, en cas de niveau ou de venue d'eau faibles, l'eau pure dans la rigole est refoulée plus haut qu'en cas de niveau plus élevé ou de venue d'eau plus importante.

8. Bassin selon à la revendication 7, caractérisé en ce qu'une tige (22, 22c) commandée par un flotteur (24, 24c) détectant le niveau du bassin est prévue pour l'élément de retenue (19c), l'élément d'étranglement (21′) ou le tuyau télescopique (21).

9. Bassin selon la revendication 8, caractérisé en ce que le flotteur (24c) est placé dans un récipient (30) situé en-dehors du bassin (10c), et qui est relié à l'écoulement du bassin (10c).

10. Bassin selon les revendications 7 à 9, caractérisé en ce que le tuyau télescopique, l'élément de retenue ou l'élément d'étranglement libèrent des ouvertures supplémentaires (33, 34, 35) au niveau d'obstacles au déversement (15a, 33, 12c) lorsqu'ils sont déplacés à la suite d'une élévation du niveau dans le bassin (10a, 10c) ou d'une augmentation de l'arrivée de courant dans le bassin.

11. Bassin selon la revendication 10, caractérisé en ce que le tuyau de trop-plein (15a) et la douille télescopique (21) présentent des ouvertures (33, 32), qui se chevauchent de plus en plus à mesure que le tuyau télescopique descend.

12. Bassin selon la revendication 10, caractérisé en ce que l'élément de retenue (19c) d'une paroi de retenue (33) peut se rabattre pour laisser place à une ouverture (34).

13. Bassin selon la revendication 10, caractérisé en ce que l'élément de retenue (19d) bascule au niveau de l'entrée d'une ouverture située sur le fond (35) de la conduite d'échappement (15c) s'étendant jusqu'à la sortie du courant.

14. Bassin selon les revendications 1 à 13, caractérisé en ce que des tuyaux d'échappement (36) présentant des trous (16e, 16f) sur leur avant et/ou leur périphérie, et avançant dans l'eau du bassin (10d) sont maintenus dans les trous (16a) de la rigole (12d).

15. Bassin selon les revendications 1 à 14, caractérisé en ce que le fond de la rigole est formé d'un seul tenant en béton avec la paroi du bassin (11c), et qu'une tôle perforée (12g) est fixée devant sur le fond de la rigole (12e), formant l'une des parois de la rigole (12c) faisant face au centre du bassin (10c).

16. Bassin selon les revendications 1 à 14, caractérisé en ce que la hauteur d'une paroi interne faisant face au centre du bassin (10a) dépasse celle d'une paroi externe de la rigole (12a) faisant face à la paroi du bassin (11c).
